# EUROPEAN PATENT SPECIFICATION

(11) **EP 4 073 827 B1**
(45) Date of publication and mention of the grant of the patent: **03.09.2025**
(21) Application number: 19850851.7
(22) Date of filing: 09.12.2019
(51) Int. Cl.: H01F 13/00, F16C 32/04

(54) **MAGNETISER APPARATUS AND METHOD**
VORRICHTUNG UND VERFAHREN ZUM MAGNETISIEREN
APPAREIL ET PROCÉDÉ DE MAGNÉTISATION

(43) Date of publication of application: 19.10.2022
(73) Proprietor: Edwards Limited, Burgess Hill, Sussex RH15 9TW (GB)
(72) Inventor: DUDDING, John, Falmouth, Cornwall TR11 4SN (GB)
(74) Representative: Totman, Clare Elizabeth
(86) International application number: PCT/GB2019/053469
(87) International publication number: WO 2021/116637

(56) References cited:
- EP-A1- 3 385 961

## Description

### FIELD OF THE INVENTION

The field of the invention relates to a magnetiser apparatus and method.

### BACKGROUND

Turbomolecular pumps are often employed as a component of the vacuum system used to evacuate devices such as scanning electron microscopes (SEMs) and lithography devices.

It is common for turbomolecular pumps to comprise an oil free, passive permanent magnetic bearing arrangement, located in the high vacuum end of the pump, to provide a substantially friction free, dry bearing arrangement free of lubricating materials that might otherwise cause contamination in the evacuated volume.

As described in EP2705263, known arrangements of passive permanent magnetic bearings employ a plurality of individual axially stacked ring magnets. The bearing arrangement comprises a series of three individual permanent magnet rings fixed to the pump housing surrounded concentrically by a series of three individual permanent magnet rings which are fixed to, and rotate with, the rotor arrangement about the axis. In another bearing arrangement, an array of four outer rotating permanent magnet rings and an array of four inner nonrotating permanent magnetic rings are arranged such that the outer, rotating, array surrounds the inner, static, array in a concentric manner. The magnets are all formed of rare earth magnetic material, such as samarium-cobalt. The outer array is attached to the rotor of a turbomolecular pump with the static array attached to the stator of the pump. For reasons of mechanical strength and practical construction, it is normal for the outer array of rings to form the rotating part of the bearing arrangement and the inner rings to form the stationary part.

In this example the magnetisation (that is, the polarization) of the magnetic rings in each array respectively is substantially aligned with the axis of rotation of the pump rotor.

The magnets are arranged within each array such that they are in mutual repulsion with each other; that is proximate magnets in an array meet their nearest neighbouring magnet in the same array with the same pole (e.g. magnets meet each other with their south pole and the outer magnetic rings in each array have their north poles facing outermost) and therefore create an almost frictionless bearing.

A great many other configurations are possible, using different numbers of rings, with axial or radial magnetisation, and arranged for either repulsive or attractive forces between rotor and stator. Although a variety of configurations are possible, they all perform optimally when the direction of magnetisation in the rings is perfectly symmetrical with respect to their rotational axis.

However, producing such magnets is problematic.

EP3385961A1 describes a monolithic permanent magnet, in particular for a permanent magnet bearing of a vacuum pump. The monolithic permanent magnet has a longitudinal axis and a plurality of sections magnetised at least approximately axially, the magnetisations of which sections are each aligned alternately opposite one another.

It is desired to provide an improved technique for producing such magnets.

### SUMMARY

According to a first aspect, there is provided a magnetiser apparatus, comprising: a first plurality of rings, each ring having a longitudinal axis, the first plurality of rings being axially-aligned and stacked along the longitudinal axis, each ring having a first face shaped to fit with an adjacent first face of a ring of magnetic material; and a current source operable to provide a current to each ring to generate a magnetic field to magnetise corresponding portions of the ring of magnetic material. The first aspect recognizes that reliably producing magnets for use in a magnetic bearing which has reduced stray transverse fields can be problematic. Typically these are formed by stacking individual magnets in a way which attempts to reduce the stray magnetic field, but this is complex and time consuming. Accordingly, an apparatus may be provided. The apparatus may be a magnetising apparatus. The magnetising apparatus may comprise two or more rings, loops or hoops. Each ring may have a longitudinal axis extending in an axial direction. The rings may be axially or concentrically aligned and stacked or assembled along the longitudinal axis. Each ring may have a face or surface which is shaped to fit or match with an adjacent face of a ring, loop or hoop of magnetic material. The apparatus may comprise a current source or supply which may provide a current to each ring of the apparatus which generates a magnetic field emanating from that ring of the apparatus which magnetises a portion of the ring of magnetic material through which that magnetic field passes. In this way, a ring of magnetic material can be magnetised using different magnetic fields from the different rings of the apparatus in order to create a ring of magnetic material with different axial portions of that ring of magnetic material magnetised in different ways. This helps to provide a more reliable ring magnet having differently magnetised axial portions, which reduces the stray field and ameliorates the need to construct such a magnet from separate ring portions.

In one embodiment, each ring has a pair of axial end-faces and each ring is orientated to position adjacent axial end-faces parallel with respect to each other. Accordingly, the rings may be stacked such that the axial or annular faces are parallel to each other in order to better align the respective magnetic fields.

In one embodiment, each ring has a pair of axial end-faces and each ring is orientated to position adjacent axial end-faces normal with respect to the longitudinal axis. Accordingly, the axial or annular faces of each ring may be located on a plane which extends transversely to the longitudinal axis.

In one embodiment, each ring is stacked to share a common longitudinal axis. Accordingly, a centreline of each ring may be aligned along the same longitudinal axis so that each ring is concentric or coaxial.

In one embodiment, each ring is spaced apart from an adjacent ring along the longitudinal axis to prevent touching. It will be appreciated that an insulator may be provided between each axial or annular end face to help prevent touching or contact between the rings.

In one embodiment, the current source is operable to provide the current to each ring to generate the magnetic field to create a dipole orientated along the longitudinal axis in each corresponding portion of the ring of magnetic material. Accordingly, the magnetic fields generated by each ring may be aligned to generate a corresponding dipole in a corresponding portion of the ring of magnetic material which extends in the axial direction.

In one embodiment, the current source is operable to provide the current which flows circumferentially around each ring. Accordingly, the current may flow around each ring.

In one embodiment, the current source is operable to provide the current to each ring to generate the magnetic field to create opposing dipoles in adjacent portions of the ring of magnetic material. Accordingly, adjacent rings of the apparatus may be arranged to support a current flow in opposing directions in order to generate a magnetic field which produces opposing dipoles in adjacent portions of the ring of magnetic material.

In one embodiment, the current source is coupled with the first plurality of rings to provide the current which flows in opposition directions circumferentially around adjacent rings.

In one embodiment, adjacent faces of the first plurality of rings are parallel.

In one embodiment, at least one of each ring and the ring of magnetic material is cylindrical.

In one embodiment, each ring is a slotted cylinder.

In one embodiment, each ring comprises an incomplete annulus defining a single turn.

In one embodiment, the incomplete annulus is C-shaped, having facing terminating ends.

In one embodiment, the facing terminating ends are spaced apart to prevent touching.

At least one of the rings has a length along the longitudinal axis which differs from other of the first plurality of rings. By changing the length or height of the rings, the dimension of the corresponding portion and the length or height of the dipole in the ring of magnetic material can be adjusted in the longitudinal dimension.

In one embodiment, the first plurality of rings have a pair of axial end rings.

In one embodiment, the axial end rings have a length along the longitudinal axis which differs from other of the first plurality of rings.

In one embodiment, the axial end rings have a greater length along the longitudinal axis than other of the first plurality of rings.

In one embodiment, the current source is coupled with a respective terminating end each of the pair of axially end rings.

In one embodiment, the current source comprises a plurality of current sources coupled with a respective one of the first plurality of rings. Accordingly, each of the rings of the apparatus may be coupled with its own current source.

In one embodiment, the first plurality of rings are arranged electrically in series with the current source. Accordingly, the rings may connected together in series.

In one embodiment, the apparatus comprises inter-ring conductors coupled between terminating ends of adjacent rings and operable to supply current between the adjacent rings. Accordingly, the ends of adjacent rings may be connected together using conductors which connect between terminating ends of those rings.

In one embodiment, the inter-ring conductors are located to extend from other than the first face.

In one embodiment, the inter-ring conductors have an axial portion extending between adjacent rings.

In one embodiment, the inter-ring conductors have radial portions extending from other than the first face of adjacent rings to the an axial portion extending between adjacent rings.

In one embodiment, the termination ends of each ring are circumferentially-aligned.

In one embodiment, the apparatus comprises a second plurality of rings located concentrically with respect to the first plurality of rings to define a void therebetween shaped to receive the ring of magnetic material.

In one embodiment, each ring of the second plurality of rings has a second face shaped to fit with an adjacent second face of the ring of magnetic material.

In one embodiment, the current source is coupled with the second plurality of rings to provide the current which flows in opposition directions circumferentially around adjacent rings.

In one embodiment, the current source is coupled with the second plurality of rings to provide the current which flows in opposition directions to current flow in adjacent rings of the first plurality of rings.

In one embodiment, adjacent faces of the second plurality of rings are parallel.

In one embodiment, at least one of the rings has a length along the longitudinal axis which differs from other of the second plurality of rings.

In one embodiment, the second plurality of rings have a pair of axial end rings.

In one embodiment, the axial end rings have a length along the longitudinal axis which differs from other of the second plurality of rings.

In one embodiment, the axial end rings have a greater length along the longitudinal axis than other of the second plurality of rings.

In one embodiment, the current source is coupled with a respective terminating end each of the pair of axially end rings.

In one embodiment, the current source comprises a plurality of current sources coupled with a respective one of the second plurality of rings.

In one embodiment, the second plurality of rings are arranged electrically in series with the current source.

In one embodiment, the apparatus comprises inter-ring conductors coupled between terminating ends of adjacent rings and operable to supply current between the adjacent rings.

In one embodiment, the inter-ring conductors are located to extend from other than the second face.

In one embodiment, the inter-ring conductors have an axial portion extending between adjacent rings.

In one embodiment, the inter-ring conductors have radial portions extending from other than the second face of adjacent rings to the an axial portion extending between adjacent rings.

In one embodiment, the termination ends of each ring are circumferentially-aligned.

In one embodiment, the termination ends of each ring of the first plurality of rings and the termination ends of the second plurality of rings are circumferentially-aligned.

According to a second aspect, there is provided a method, comprising: locating a ring of magnetic material with the magnetiser as claimed in any preceding claim and magnetising the ring of magnetic material by operating the current source.

In one embodiment, the method comprises rotating the ring of magnetic material circumferentially about the longitudinal axis and remagnetising the ring magnet by operating the current source.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figures 1 to 3 illustrate a magnetiser apparatus according to one embodiment; and
Figure 4 illustrates a magnetised magnetic material, according to one embodiment.

### DESCRIPTION OF THE EMBODIMENTS

Before discussing the embodiments in detail, first an overview will be provided. Embodiments provide an apparatus which operates to produce a magnet from a ring, cylinder or annulus of magnetic material. A set of rings are stacked or arranged on top of each other. The magnetic material is placed proximate the rings. A current is generated to flow in each of the rings, which creates a magnetic field which acts to magnetise the magnetic material. An additional set of rings may be provided which are positioned proximate the magnetic material, typically concentrically with respect to the set of rings. These may also receive a current which generates a magnetic field to assist magnetising the magnetic material. Each of the rings is typically physically separated from each other in the vicinity of the magnetic material but may be electrically coupled distal from the magnetic material in order to provide a current path from one ring to another. The axial height of the rings is typically set to create a magnetic field in a corresponding axial portion of the magnetic material. The axially end-most rings are typically of a greater axial height than axially-inner rings. Typically, adjacent rings are configured to support current flow in opposing directions in order to create opposing magnetic fields to create opposing dipoles in the magnetic material.

### Magnetic Material

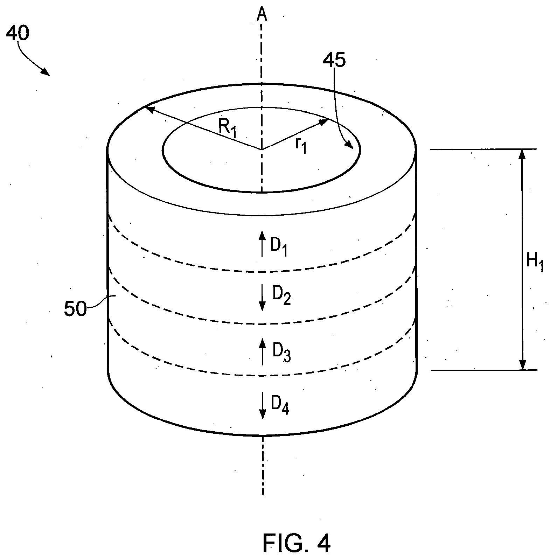

As can be seen in Figure 4, the magnetic material in this embodiment is shaped as a cylinder 40. The cylinder has a height H1 in the along the longitudinal axis A. The cylinder 40 has an inner surface 45 defined by an inner radius r1. The cylinder 40 has an outer surface 50 defined by an outer radius R1.

### Magnetiser Apparatus

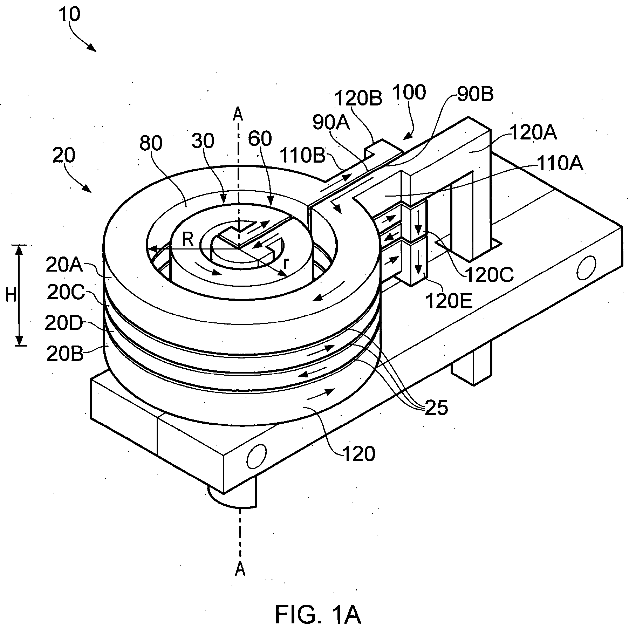

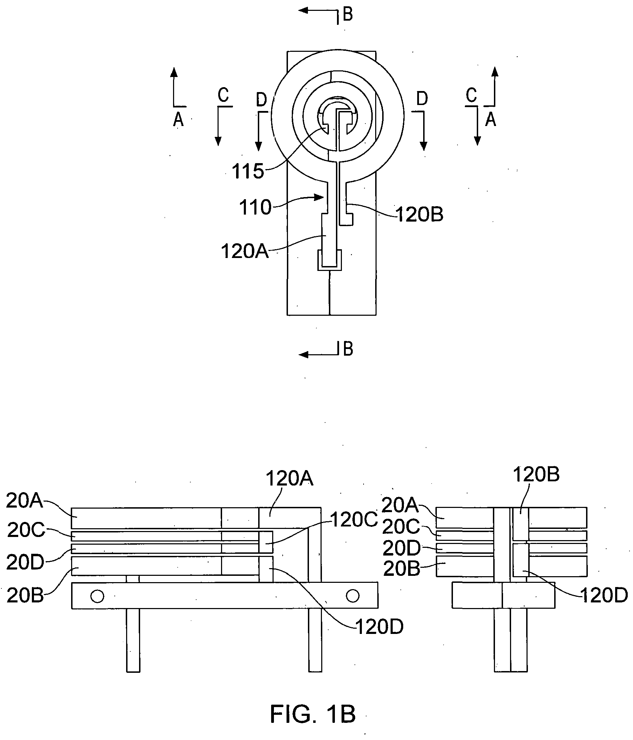

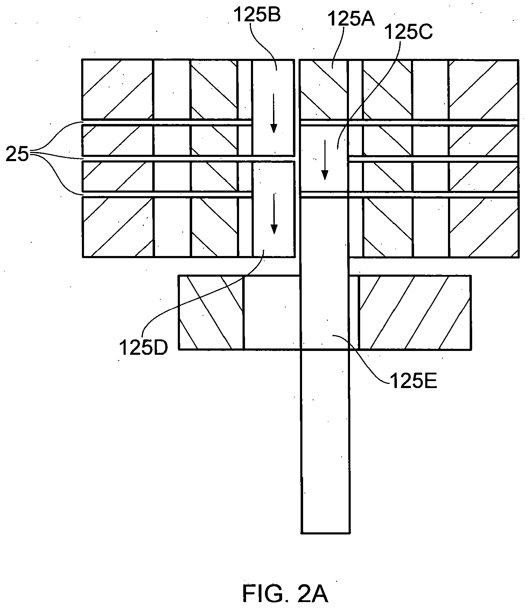

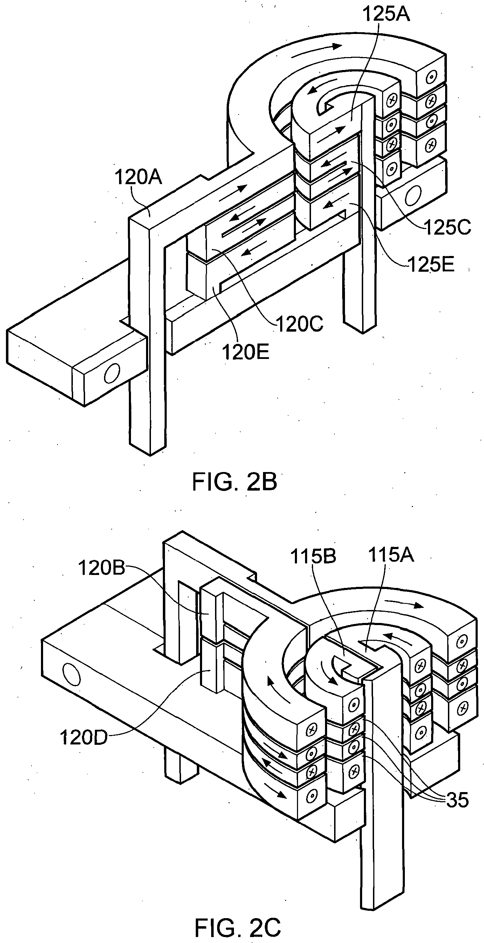

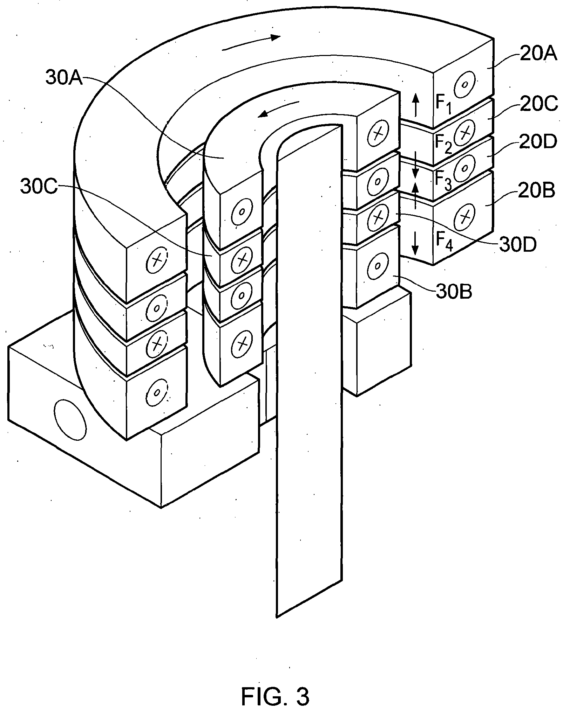

Figure 1A is an isometric view, Figure 1B show orthogonal views, Figure 2A is a sectional view along D-D, Figure 2B is a sectional view along B-B, Figure 2C is a sectional view along C-C and Figure 3 is a sectional view along A-A illustrating a magnetiser apparatus 10 according to one embodiment. The magnetiser apparatus 10 comprises a radially outermost set of rings 20 and a radially innermost set of rings 30. Each ring is generally shaped as a slotted cylinder and is positioned along a common longitudinal axis A. As can be seen in Figure 1A, four rings are provided in the outer set of rings 20 and, as can be seen in Figure 2B, four rings are provided in the inner set of rings 30. A pair of outer, axially end rings 20A, 20B receive a pair of outer, axially inner rings 20C, 20D. Each of the rings is separated by a non-conductive gap 25. The gap 25 may be filled with a suitable insulating material to provide adequate electrical and mechanical separation between each of the rings. Likewise, as can be seen in Figure 2C, a pair of inner, axially end rings 30A, 30B receive a pair of inner, axially inner rings 30C, 30D. Each of the rings is separated by a non-conductive gap 35. The gap 35 may be filled with a suitable insulating material to provide adequate electrical and mechanical separation between each of the rings. The outer set of rings 20 are concentric and coaxially aligned with respect to the inner set of rings 30 to share the common longitudinal axis A.

A magnetising void 60 is an annular space which extends radially and longitudinally between the inner set of rings 30 and the outer set of rings 20. The shape and dimensions of the magnetising void 60 are set based on the dimensions of the cylinder 40. In particular, the radially outer surface of each of the inner set of rings 30 is defined by a radius r, where r is less than r1. Also, the radially inner surface 80 of each of the outer set of rings 20 is defined by a radius R, where R is greater than R1. Furthermore, the overall height of the inner set of rings 30 and the outer set of rings 20 along the longitudinal axis A is dimensioned to be H, where H is greater than H1. This enables the cylinder 40 to be placed into and removed from the magnetising void 60.

Each of the outer set of rings 20 is slotted which defines a pair of opposing faces 90A, 90B which also extend radially and which defines a gap 100 also extending radially and along the longitudinal axis A. Hence, the outer set of rings 20 is incomplete. Likewise, each of the inner set of rings 30 is slotted which defines a pair of opposing faces which also extend radially and which defines a gap also extending radially and along the longitudinal axis A. Hence, the outer set of rings 30 is incomplete.

The outer set of rings 20 each have stubs 110 which extend radially from a radially outer surface 120 of the outer set of rings 20. Each stub 110 terminates with a coupling structure which is configured to provide current flow in the required direction in each of the rings, as will now be explained in more detail. In the following description a light arrow indicates the direction of flow of current, ⊙ indicates a current flowing towards the surface, Ⓧ indicates a current flowing away from the surface and a dark arrow indicates the direction of a magnetic field. The stub 110A associated with the axially end ring 20A has a coupling 120A which only connects with that stub 110A. A current source is connected to the coupling 120A, which provides a current flow along the stub 110A and clockwise through the axially end ring 20A to the stub 110B associated with the axially end ring 20A. The coupling 120B couples the stubs 110B of the axially end ring 20A and the axially inner ring 20C. Accordingly, current flows through the coupling 120B along the longitudinal axis A from the axially end ring 20A to the axially inner ring 20C. Current then flows along the stub 110B into the axially inner ring 20C and flows in the anticlockwise direction to its stub 110A. Current then flows radially along the stub 110A into the coupling 120C which couples the stubs 110A of the axially inner rings 120C and 120D. Accordingly, current flows along the longitudinal axis A within the coupling 120C from the stub 110A of the axially inner ring 20C to the stub 110A of the axially inner ring 20D. Current then flows radially inwards along the stub 110A of the axially inner ring 20D and current then flows clockwise around the axially inner ring 20D to the stub 110B of the axially inner ring 20D. The current is then received by the coupling 120D which couples stubs 110B of the axially inner ring 20D with the axially end ring 20B. Current then flows radially inwards along the stub 110B of the axially end ring 20B and anticlockwise around the axially end ring 20B to the stub 110A of the axially end ring 20B. The current then flows to a coupling 120E, which is connected to the other terminal of the current source.

The inner set of rings 30 each have stubs 115 which extend radially from a radially inner surface of the inner set of rings 30. Each stub 115 terminates with a coupling structure which is configured to provide current flow in the required direction in each of the rings, as will now be explained in more detail. The stub 115A associated with the axially end ring 30A has a coupling 125A which only connects with that stub 115A. A current source is connected to the coupling 125A, which provides a current flow along the stub 115A and anticlockwise through the axially end ring 30A to the stub 115B associated with the axially end ring 30A. The coupling 125B couples the stubs 115B of the axially end ring 30A and the axially inner ring 30C. Accordingly, current flows through the coupling 125B along the longitudinal axis A from the axially end ring 30A to the axially inner ring 30C. Current then flows along the stub into the axially inner ring 30C and flows in the clockwise direction to its other stub. Current then flows radially along that stub into the coupling 125C which couples the stubs of the axially inner rings 30C and 30D. Accordingly, current flows along the longitudinal axis A within the coupling 125C from the stub of the axially inner ring 30C to the stub of the axially inner ring 30D. Current then flows radially inwards along the stub of the axially inner ring 30D and current then flows anticlockwise around the axially inner ring 30D to the other stub of the axially inner ring 30D. The current is then received by the coupling 125D which couples stubs of the axially inner ring 30D with the axially end ring 30B. Current then flows radially inwards along the stub of the axially end ring 30B and clockwise around the axially end ring 30B to the other stub of the axially end ring 30B. The current then flows to a coupling 125E, which is connected to the other terminal of the current source.

The current flow generates opposing magnetic fields F1 to F4 in portions of the magnetic void 60 between the inner set of rings 30 and the outer set of rings 20. This magnetises the corresponding portions of the cylinder 40 and creates opposing dipoles D1 to D4.

The magnetic field in the vicinity of the gaps 100 will be weaker than elsewhere. Accordingly, after performing an initial magnetisation by supplying current to the inner and outer set of rings 20, 30, the cylinder 40 is rotated within the magnetic void 60 and current is supplied again to perform a further magnetisation.

Accordingly, an embodiment provides a method for polarising multiple axially opposing poles into a single hollow cylinder of magnetic material. A single conductor is arranged in an array of alternating coil directions for the purposes of magnetising all poles simultaneously. The single conductor can be arranged either as a thick conductor with a single turn per magnetic pole or as a thinner conductor with multiple turns per magnetic pole. An embodiment magnetises axially opposing poles along the length of a single piece of material, solving the problems of dipole alignment, transverse stray field and material handling during assembly into the turbo-pump rotor. An embodiment provides for: minimal axial gap between coils; top and bottom coils thicker than middle coils; and terminations allowing current to pass through the coils in a manner which minimises corruption to the polarising fields. The two coils are arranged in series, with appropriate terminations, allowing current to pass through the coils in a manner which minimises corruption to the polarising fields. The polarising field may be applied multiple times with different relative rotational orientations of the coils and magnetic material (to overcome field asymmetry). A second variant of the coils would use multi-turn rather than single turn coils but in other respects would have a similar general form to the single turn variant.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

magnetiser apparatus 10
outer set of rings 20
inner set of rings 30
axially end rings 20A, 20B, 30A, 30B
axially inner rings 20C, 20D, 30C, 30D
gaps 25, 35, 100
cylinder 40
inner surface 45, 80
inner radius r1
outer surface 50, 120
outer radius R1
height H, H1
magnetising void 60
longitudinal axis A
faces 90A, 90B
stubs 110A, 110B
coupling 120A,120B,120C, 120D, 120E

## Claims

1. A magnetiser apparatus (10), comprising:
a first plurality of rings (20), each ring (20A, 20B, 20C, 20D) having a longitudinal axis (A), said first plurality of rings being axially-aligned and stacked along said longitudinal axis, each ring of the first plurality of rings having a first face (80) shaped to fit with an adjacent first face (50) of a ring of magnetic material (40) and wherein at least one of said rings of the first plurality of rings has a length along said longitudinal axis which differs from other of said first plurality of rings; and
a current source operable to provide a current to each ring of the first plurality of rings to generate a magnetic field to magnetise corresponding portions of said ring of magnetic material.

2. The magnetiser apparatus (10) of claim 1, wherein each ring of the first plurality of rings is stacked to share a common longitudinal axis.

3. The magnetiser apparatus (10) of claim 1 or 2, wherein said current source is operable to provide said current to each ring of the first plurality of rings to generate said magnetic field to create a dipole orientated along said longitudinal axis in each corresponding portion of said ring of magnetic material.

4. The magnetiser apparatus (10) of any preceding claim, wherein said current source is operable to provide said current which flows circumferentially around each ring of the first plurality of rings.

5. The magnetiser apparatus (10) of any preceding claim, wherein said current source is operable to provide said current to each ring of the first plurality of rings to generate said magnetic field to create opposing dipoles in adjacent portions of said ring of magnetic material.

6. The magnetiser apparatus (10) of any preceding claim, wherein said current source is coupled with said first plurality of rings to provide said current which flows in opposition directions circumferentially around adjacent rings of the first plurality of rings.

7. The magnetiser apparatus (10) of any preceding claim, wherein at least one of each ring and said ring of magnetic material is cylindrical.

8. The magnetiser apparatus (10) of any preceding claim, wherein each ring is C-shaped, having facing terminating ends, wherein said facing terminating ends are optionally spaced apart to prevent touching.

9. The magnetiser apparatus (10) of any preceding claim, wherein said first plurality of rings have a pair of axial end rings (20A, 20B), wherein said axial end rings optionally have a length along said longitudinal axis which differs from other of said first plurality of rings.

10. The magnetiser apparatus (10) of claim 9, wherein said current source is coupled with a respective terminating end each of said pair of axially end rings.

11. The magnetiser apparatus (10) of any preceding claim, wherein said first plurality of rings are arranged electrically in series with said current source.

12. The magnetiser apparatus (10) of any preceding claim, comprising inter-ring conductors (110A, 110B, 120B, 120C, 120D) coupled between terminating ends of adjacent rings and operable to supply current between said adjacent rings, optionally wherein said inter-ring conductors:
(i) are located to extend from other than said first face; and/or
(ii) have an axial portion extending between adjacent rings; and/or
(iii) have radial portions extending from other than said first face of adjacent rings to said an axial portion extending between adjacent rings.

13. The magnetiser apparatus (10) of any one of claims 10 to 12, wherein said termination ends of each ring are circumferentially-aligned.

14. The magnetiser apparatus (10) of any preceding claim, comprising a second plurality of rings (30) located concentrically with respect to said first plurality of rings to define a void (60) therebetween shaped to receive said ring of magnetic material, wherein: (i) each ring of said second plurality of rings optionally has a second face shaped to fit with an adjacent second face (45) of said ring of magnetic material; and/or (ii) said current source is optionally coupled with said second plurality of rings to provide said current which flows in opposition directions circumferentially around adjacent rings.

15. A method, comprising:
locating a ring of magnetic material (40) with a magnetiser apparatus (10) comprising a first plurality of rings (20), each ring (20A, 20B, 20C, 20D) having a longitudinal axis (A), said first plurality of rings being axially-aligned and stacked along said longitudinal axis, each ring of the first plurality of rings having a first face (80) shaped to fit with an adjacent first face (50) of the ring of magnetic material and wherein at least one of said rings of the first plurality of rings has a length along said longitudinal axis which differs from other of said first plurality of rings, and a current source operable to provide a current to each ring of the first plurality of rings to generate a magnetic field to magnetise corresponding portions of said ring of magnetic material,
magnetising said ring of magnetic material by operating said current source and rotating said ring of magnetic material circumferentially about said longitudinal axis and remagnetising said ring of magnetic material by operating said current source.

## Patentansprüche

1. Vorrichtung (10) zum Magnetisieren, umfassend:
eine erste Vielzahl von Ringen (20), wobei jeder Ring (20A, 20B, 20C, 20D) eine Längsachse (A) aufweist, wobei die erste Vielzahl von Ringen axial ausgerichtet und entlang der Längsachse gestapelt sind, wobei jeder Ring von der ersten Vielzahl von Ringen eine erste Fläche (80) aufweist, die so geformt ist, dass sie zu einer benachbarten ersten Fläche (50) eines Rings aus magnetischem Material (40) passt, und wobei mindestens einer der Ringe von der ersten Vielzahl von Ringen eine Länge entlang der Längsachse aufweist, die sich von anderen von der ersten Vielzahl von Ringen unterscheidet; und
eine Stromquelle, die dazu betreibbar ist, jedem Ring von der ersten Vielzahl von Ringen einen Strom bereitzustellen, um ein Magnetfeld zu erzeugen, um entsprechende Abschnitte des Rings aus magnetischem Material zu magnetisieren.

2. Vorrichtung (10) zum Magnetisieren nach Anspruch 1, wobei jeder Ring von der ersten Vielzahl von Ringen gestapelt ist, um eine gemeinsame Längsachse zu teilen.

3. Vorrichtung (10) zum Magnetisieren nach Anspruch 1 oder 2, wobei die Stromquelle dazu betreibbar ist, den Strom jedem Ring von der ersten Vielzahl von Ringen bereitzustellen, um das Magnetfeld zum Herstellen eines Dipols, ausgerichtet entlang der Längsachse in jedem entsprechenden Abschnitt des Rings aus magnetischem Material, zu erzeugen.

4. Vorrichtung (10) zum Magnetisieren nach einem der vorhergehenden Ansprüche, wobei die Stromquelle dazu betreibbar ist, den Strom bereitzustellen, der umlaufend um jeden Ring von der ersten Vielzahl von Ringen fließt.

5. Vorrichtung (10) zum Magnetisieren nach einem der vorhergehenden Ansprüche, wobei die Stromquelle dazu betreibbar ist, den Strom jedem Ring von der ersten Vielzahl von Ringen bereitzustellen, um das Magnetfeld zum Herstellen gegenüberliegender Dipole in benachbarten Abschnitten des Rings aus magnetischem Material zu erzeugen.

6. Vorrichtung (10) zum Magnetisieren nach einem der vorhergehenden Ansprüche, wobei die Stromquelle mit der ersten Vielzahl von Ringen gekoppelt ist, um den Strom bereitzustellen, der in entgegengesetzten Richtungen umlaufend um benachbarte Ringe von der ersten Vielzahl von Ringen fließt.

7. Vorrichtung (10) zum Magnetisieren nach einem der vorhergehenden Ansprüche, wobei mindestens einer von allen Ringen und der Ring aus magnetischem Material zylindrisch sind.

8. Vorrichtung (10) zum Magnetisieren nach einem der vorhergehenden Ansprüche, wobei jeder Ring C-förmig ist und gegenüberliegende abschließende Enden aufweist, wobei die gegenüberliegenden abschließenden Enden optional beabstandet sind, um ein Berühren zu verhindern.

9. Vorrichtung (10) zum Magnetisieren nach einem der vorhergehenden Ansprüche, wobei die erste Vielzahl von Ringen ein Paar axialer Abschlussringe (20A, 20B) aufweist, wobei die axialen Abschlussringe optional eine Länge entlang der Längsachse aufweisen, die sich von anderen von der ersten Vielzahl von Ringen unterscheidet.

10. Vorrichtung (10) zum Magnetisieren nach Anspruch 9, wobei die Stromquelle mit einem entsprechenden abschließenden Ende jedes von dem Paar axialer Abschlussringe gekoppelt ist.

11. Vorrichtung (10) zum Magnetisieren nach einem der vorhergehenden Ansprüche, wobei die erste Vielzahl von Ringen elektrisch in Reihe mit der Stromquelle angeordnet ist.

12. Vorrichtung (10) zum Magnetisieren nach einem der vorhergehenden Ansprüche, umfassend Zwischenringleiter (110A, 110B, 120B, 120C, 120D), gekoppelt zwischen abschließenden Enden benachbarter Ringe und dazu betreibbar, Strom zwischen den benachbarten Ringen zuzuführen, wobei die Zwischenringleiter optional:
(i) so positioniert sind, dass sie sich von einer anderen als der ersten Fläche erstrecken;
und/oder
(ii) einen axialen Abschnitt aufweisen, der sich zwischen benachbarten Ringen erstreckt;
und/oder
(iii) radiale Abschnitte aufweisen, die sich von anderen als der ersten Fläche benachbarter Ringe zu einem sich zwischen benachbarten Ringen erstreckenden axialen Abschnitt erstrecken.

13. Vorrichtung (10) zum Magnetisieren nach einem der Ansprüche 10 bis 12, wobei die abschließenden Enden jedes Rings umlaufend ausgerichtet sind.

14. Vorrichtung (10) zum Magnetisieren nach einem der vorhergehenden Ansprüche, umfassend eine zweite Vielzahl von Ringen (30), die in Bezug auf die erste Vielzahl von Ringen konzentrisch angeordnet sind, um dazwischen einen Hohlraum (60) zu definieren, der so geformt ist, dass er den Ring aus magnetischem Material aufnimmt, wobei: (i) jeder Ring von der zweiten Vielzahl von Ringen optional eine zweite Fläche aufweist, die so geformt ist, dass sie zu einer benachbarten zweiten Fläche (45) des Rings aus magnetischem Material passt; und/oder (ii) die Stromquelle optional mit der zweiten Vielzahl von Ringen gekoppelt ist, um den Strom bereitzustellen, der in entgegengesetzten Richtungen umlaufend um benachbarte Ringe fließt.

15. Verfahren, umfassend:
Platzieren eines Rings aus magnetischem Material (40) mit einer Vorrichtung (10) zum Magnetisieren, umfassend eine erste Vielzahl von Ringen (20), wobei jeder Ring (20A, 20B, 20C, 20D) eine Längsachse (A) aufweist, wobei die erste Vielzahl von Ringen axial ausgerichtet und entlang der Längsachse gestapelt sind, wobei jeder Ring von der ersten Vielzahl von Ringen eine erste Fläche (80) aufweist, die so geformt ist, dass sie zu einer benachbarten ersten Fläche (50) des Rings aus magnetischem Material passt, und wobei mindestens einer der Ringe von der ersten Vielzahl von Ringen eine Länge entlang der Längsachse aufweist, die sich von einem anderen von der ersten Vielzahl von Ringen unterscheidet, und eine Stromquelle, die dazu betreibbar ist, jedem Ring von der ersten Vielzahl von Ringen einen Strom bereitzustellen, um ein Magnetfeld zu erzeugen, um entsprechende Abschnitte des Rings aus magnetischem Material zu magnetisieren,
Magnetisieren des Rings aus magnetischem Material durch Betreiben der Stromquelle und Drehen des Rings aus magnetischem Material umlaufend um die Längsachse und Remagnetisieren des Rings aus magnetischem Material durch Betreiben der Stromquelle.

## Revendications

1. Appareil de magnétisation (10), comprenant :
une première pluralité d'anneaux (20), chaque anneau (20A, 20B, 20C, 20D) présentant un axe longitudinal (A), ladite première pluralité d'anneaux étant alignés axialement et empilés le long dudit axe longitudinal, chaque anneau de la première pluralité d'anneaux présentant une première face (80) formée pour s'adapter à une première face adjacente (50) d'un anneau de matériau magnétique (40) et dans lequel au moins un parmi lesdits anneaux de la première pluralité d'anneaux présente une longueur le long dudit axe longitudinal qui diffère de celle de l'autre de ladite première pluralité d'anneaux ; et
une source de courant servant à fournir un courant à chaque anneau de la première pluralité d'anneaux pour générer un champ magnétique pour magnétiser des parties correspondantes dudit anneau de matériau magnétique.

2. Appareil de magnétisation (10) selon la revendication 1, dans lequel chaque anneau de la première pluralité d'anneaux est empilé pour partager un axe longitudinal commun.

3. Appareil de magnétisation (10) selon la revendication 1 ou 2, dans lequel ladite source de courant sert à fournir ledit courant à chaque anneau de la première pluralité d'anneaux pour générer ledit champ magnétique pour créer un dipôle orienté le long dudit axe longitudinal dans chaque partie correspondante dudit anneau de matériau magnétique.

4. Appareil de magnétisation (10) selon une quelconque revendication précédente, dans lequel ladite source de courant sert à fournir ledit courant qui circule circonférentiellement autour de chaque anneau de la première pluralité d'anneaux.

5. Appareil de magnétisation (10) selon une quelconque revendication précédente, dans lequel ladite source de courant sert à fournir ledit courant à chaque anneau de la première pluralité d'anneaux pour générer ledit champ magnétique pour créer des dipôles opposés dans des parties adjacentes dudit anneau de matériau magnétique.

6. Appareil de magnétisation (10) selon une quelconque revendication précédente, dans lequel ladite source de courant est couplée à ladite première pluralité d'anneaux pour fournir ledit courant qui circule dans des directions opposées circonférentiellement autour d'anneaux adjacents de la première pluralité d'anneaux.

7. Appareil de magnétisation (10) selon une quelconque revendication précédente, dans lequel au moins un parmi chaque anneau et ledit anneau de matériau magnétique est cylindrique.

8. Appareil de magnétisation (10) selon une quelconque revendication précédente, dans lequel chaque anneau est en forme de C, présentant des extrémités terminales se faisant face, dans lequel lesdites extrémités terminales se faisant face sont facultativement espacées pour éviter tout contact.

9. Appareil de magnétisation (10) selon une quelconque revendication précédente, dans lequel ladite première pluralité d'anneaux présente une paire d'anneaux d'extrémité axiale (20A, 20B), dans lequel lesdits anneaux d'extrémité axiale présentent facultativement une longueur le long dudit axe longitudinal qui diffère de celle d'un autre de ladite première pluralité d'anneaux.

10. Appareil de magnétisation (10) selon la revendication 9, dans lequel ladite source de courant est couplée à une extrémité terminale respective de chacun de ladite paire d'anneaux d'extrémité axiale.

11. Appareil de magnétisation (10) selon une quelconque revendication précédente, dans lequel ladite première pluralité d'anneaux sont agencés électriquement en série avec ladite source de courant.

12. Appareil de magnétisation (10) selon une quelconque revendication précédente, comprenant des conducteurs inter-anneaux (110A, 110B, 120B, 120C, 120D) couplés entre des extrémités terminales d'anneaux adjacents et servant à fournir du courant entre lesdits anneaux adjacents, dans lequel lesdits conducteurs inter-anneaux :
(i) sont situés de façon à s'étendre à partir d'une autre face que ladite première face ; et/ou
(ii) présentent une partie axiale s'étendant entre des anneaux adjacents ; et/ou
(iii) présentent des parties radiales s'étendant d'une autre face que ladite première face d'anneaux adjacents à ladite partie axiale s'étendant entre des anneaux adjacents.

13. Appareil de magnétisation (10) selon l'une quelconque des revendications 10 à 12, dans lequel lesdites extrémités terminales de chaque anneau sont alignées circonférentiellement.

14. Appareil de magnétisation (10) selon une quelconque revendication précédente, comprenant une seconde pluralité d'anneaux (30) situés concentriquement par rapport à ladite première pluralité d'anneaux pour définir un vide (60) intermédiaire formé pour recevoir ledit anneau de matériau magnétique, dans lequel : (i) chaque anneau de ladite seconde pluralité d'anneaux présente facultativement une seconde face formée pour s'adapter à une seconde face (45) adjacente dudit anneau de matériau magnétique ; et/ou (ii) ladite source de courant est facultativement couplée à ladite seconde pluralité d'anneaux pour fournir ledit courant qui circule dans des directions opposées circonférentiellement autour d'anneaux adjacents.

15. Procédé, comprenant :
le positionnement d'un anneau de matériau magnétique (40) avec un appareil de magnétisation (10) comprenant une première pluralité d'anneaux (20), chaque anneau (20A, 20B, 20C, 20D) présentant un axe longitudinal (A), ladite première pluralité d'anneaux étant alignée axialement et empilée le long dudit axe longitudinal, chaque anneau de la première pluralité d'anneaux présentant une première face (80) formée pour s'adapter à une première face adjacente (50) de l'anneau de matériau magnétique et dans lequel au moins un parmi lesdits anneaux de la première pluralité d'anneaux présente une longueur le long dudit axe longitudinal qui diffère de celle de l'autre de ladite première pluralité d'anneaux, et une source de courant servant à fournir un courant à chaque anneau de la première pluralité d'anneaux pour générer un champ magnétique pour magnétiser des parties correspondantes dudit anneau de matériau magnétique,
la magnétisation dudit anneau de matériau magnétique par actionnement de ladite source de courant et rotation dudit anneau de matériau magnétique circonférentiellement autour dudit axe longitudinal et remagnétisation dudit anneau de matériau magnétique par actionnement de ladite source de courant.
